Europäisches Patentamt

European Patent Office

Office européen des brevets

(19)

(11) Publication number: 0 294 928
A1

# (12) EUROPEAN PATENT APPLICATION

(21) Application number: 88303727.7

(51) Int. Cl.⁴: **F16G 5/16**

(22) Date of filing: 26.04.88

(30) Priority: 18.05.87 US 50686

(43) Date of publication of application:
14.12.88 Bulletin 88/50

(84) Designated Contracting States:
DE FR GB

(71) Applicant: GENERAL MOTORS CORPORATION
General Motors Building 3044 West Grand
Boulevard
Detroit Michigan 48202(US)

(72) Inventor: Chana, Howard Eugene
5265 Shrewsbury Drive
Troy Michigan 48098(US)
Inventor: Solt, Michael Byran
1291 Trevino
Troy Michigan 48098(US)

(74) Representative: Denton, Michael John et al
Patent Section - Luton Office (F6) Vauxhall
Motors Limited P.O. Box 3 Kimpton Road
Luton Bedfordshire LU2 0SY(GB)

(54) **Fan-folded drive belt.**

(57) A fan-folded drive belt comprises a folded metal belt (14) maintained in a continuous loop by means of a plurality of continuous metal bands (22 to 30) that are maintained in tension and are supported in a band slot (32,34) of the folded metal belt. The folded metal belt is made from a single strip of metal which is formed by machining processes such as stamping and then accordion-folded to produce individual drive members arranged with long and short drive leg members (20,18) disposed adjacent one another, with adjacent drive members being interconnected at either their inner or outer extremities.

The drive belt transfers drive forces between spaced pulleys or sheaves (10,12) by frictional engagement therewith. During such driving, the outer portion of the belt is deflected or flexes as the belt travels around the pulleys. This causes high stress levels to be induced within the individual drive members.

To reduce the stress level at the various points on the folded belt, a portion of the belt material disposed outwardly of the continuous metal bands is removed at the fold line (44). This portion of the folded belt is also made transversely wider, and preferably slightly longer in the outward direction.

Fig. 1

Fig. 2

# FAN-FOLDED DRIVE BELT

This invention relates to fan-folded drive belts as specified in the preamble of claim 1, for example as disclosed in US-A-4 540 388.

Prior-art fan-folded drive belts are disclosed for example in US-A-4 581 002 and in the said US-A-4 540 388. The drawings in these patent specifications illustrate the prior-art shape of the stamped strip prior to folding. These prior-art belts exhibit high levels of stress at the inner and outer corners of the belt slot, which can be detrimental to the life of the belt, or significantly limit the load capacity of the belt.

The present invention is concerned with increasing the potential life of the belt and/or increasing the potential torque-transmitting capacity of the belt.

To this end a fan-folded drive belt in accordance with the present invention is characterised by the features specified in the characterising portion of claim 1.

With a fan-folded drive belt in accordance with the present invention, improved belt life is obtainable due to the reduction of stress on the folded portion of the belt.

More specifically, in a fan-folded drive belt in accordance with the present invention a more even stress distribution within the drive block members of the fan-folded belt is achieved by changing the shape of the drive members. The change in shape also reduces the maximum stress by 40 to 60% as compared with a similarly-sized prior-art drive belt. This produces a change in the transverse cross-sectional shape of the folded belt, with the effect of the changed cross-sectional shape being to soften the spring rate of the folded members in the longitudinal direction. The strip can be stamped into its final shape prior to folding, or alternatively the strip can be first folded and then machined.

In a fan-folded drive belt in accordance with the present invention, material has been removed from the outer fold line or joining surface of that portion of the folded belt member that is disposed above the band slot. For optimum stress value, a fan-folded drive belt in accordance with the present invention may have a slight increase in the height and width of the outer portion of each folded member.

In a preferred embodiment of a fan-folded drive belt in accordance with the present invention, the outer fold line or joining surface is limited in length to less than 30% of the total transverse length of the adjacent members at the fold line. The joining material is disposed solely at the outer extremities of the fold line, thus leaving the centre portion of the adjacent drive blocks unconnected. This structure softens the spring rate and distributes the stresses more evenly, and also potentially provides lower stress levels.

In the preferred embodiment, there is a cut-out or undercut portion on a taper face of the drive block between the pitch diameter and the band slot. This reduces scrub between the face of the pulley and the taper of the drive block, to thereby improve the overall efficiency of the drive system.

The present invention thereby makes available a fan-folded drive belt potentially having reduced stress levels in the fan-folded portion of the drive belt as it negotiates the pulley in the belt drive system.

The invention also makes available a fan-folded drive belt for a pulley drive system wherein the folded portion of the belt outwardly of the band slot is continuous for less than 30% of the total fold length, and is distributed equally at the distal outer edges when viewed in the transverse direction.

The invention further makes available a fan-folded drive belt for a pulley drive system wherein the fan-folded drive belt has a fan-folded metal portion maintained in a continuous loop by continuous metal bands maintained under tension in band slots formed in the fan-folded metal portion, and wherein a portion of the fan-folded metal portion disposed outwardly of the band slot has laterally extending arms and upstanding arms, and also wherein the upstanding arms are contiguous with the corresponding elements of the adjacent portion of the fan-folded drive belt.

In the drawings:

Figure 1 is an elevational view of a pulley and belt drive system utilising a preferred embodiment of a fan-folded drive belt in accordance with the present invention;

Figure 2 is a cross-sectional view on the line 2--2 of Figure 1;

Figure 3 is an enlarged fragmentary elevational view illustrating a portion of the fan-folded drive belt shown at 3 in Figure 1; and

Figure 4 is a plan view of the fan-folded drive belt in its unfolded condition.

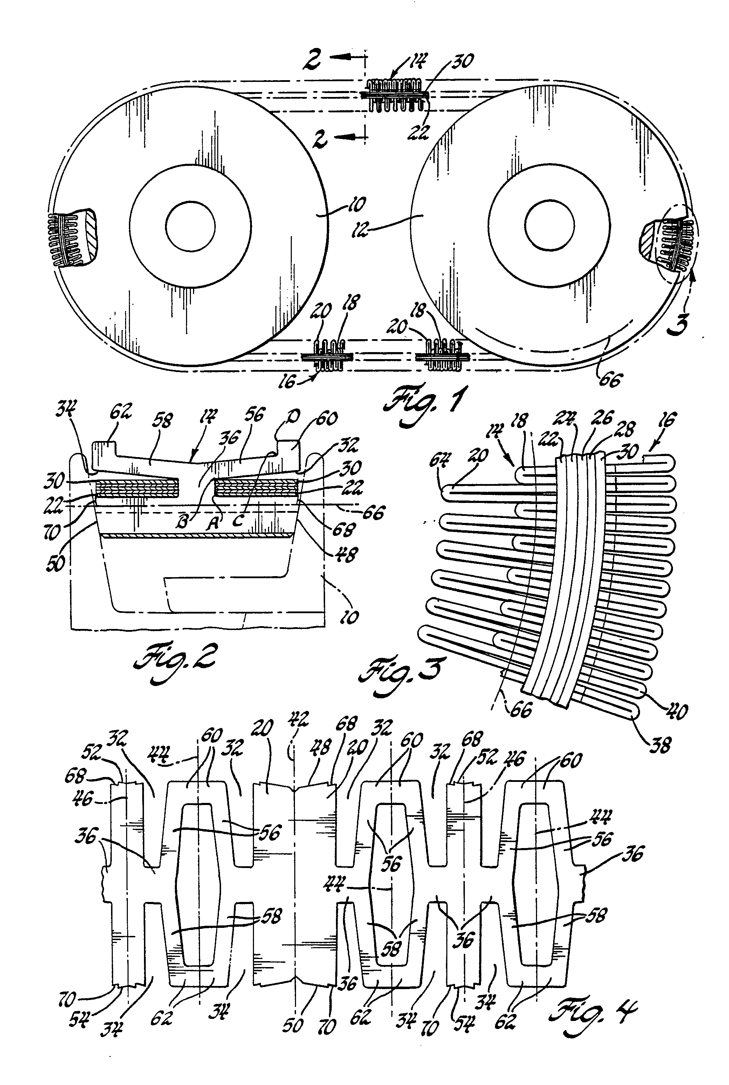

With reference now to the drawing, wherein like figures represent like or corresponding parts throughout the several views, there is seen in Figure 1 a pair of drive pulleys 10 and 12 which are interconnected by a drive belt generally designated 14. The pulleys 10 and 12 can be of either the fixed or variable V-groove type. Since the construction of both these types of pulley is well-known, further discussion at this point of details of their structure appears unnecessary, since such details of structure are not of themselves relevant to the understanding of the present invention.

Figure 2 shows the drive belt 14 entering one of the drive pulleys, such as 10, which is shown in phantom lines.

As can be seen from Figures 1 and 3, the belt 14 comprises a fan-folded portion, generally designated 16, having short legs 18 and long legs 20. The fan-folded portion 16 is maintained in a continuous loop by means of a plurality of continuous metal bands designated 22 to 30. A set of these metal bands 22 to 30 resides in each band slot 32 and 34, these band slots being formed in the fan-folded portion 16. As is seen in Figure 2, the band slots 32 and 34 are disposed on either side of a centre bar 36.

As is described in the prior-art patents referred to above, the continuous metal bands are loaded in tension to maintain the ends of the fan-folded portion 16 in abutment. This prevents separation while the abutting ends are traversing the span between the pulleys 10 and 12.

In Figure 3, it can be seen that the outermost ends of the fan-folded portion 16, which are designated 38 and 40, deflect such that there is separation of these adjacent ends when the belt is negotiating the pulleys.

Figure 4 is a view which depicts the fan-folded portion 16 in the unfolded condition. This is as the fan-folded portion would appear upon leaving a stamping machine, or after being folded and formed by machining processes. In either event, the folded belt is formed from a continuous metal strip. The unfolded portion has a plurality of fold lines 42, 44 and 46. The fold lines 44 are outer fold lines, whereas the fold lines 42 and 46 are inner fold lines. The portions of the belt disposed between the fold lines 44 and centred on the fold line 42 are mirror images about the fold line 42. The portions of the belt disposed between adjacent fold lines 44 and centred on the intermediate fold line 46 are mirror images about the fold line 46. The material that is disposed between the outer fold lines 44 and centred on the fold line 42 describes one of the long legs 20, and the material that is disposed between adjacent fold lines 44 and centred on the fold line 46 describes one of the short legs 18. Each short leg 18 is joined to an adjacent long leg 20 at the outer fold line 44, and vice versa. This fold line, as described above, occurs at the outer extremities of the folded portion 16, previously designated as 38 and 40.

Each long leg 20 has drive faces 48 and 50 which frictionally engage the surfaces of the drive pulleys 10 and 12. Each short leg 18 has drive faces 52 and 54 which also engage the drive pulleys 10 and 12. The drive faces 48, 50 and 52, 54 constitute the tapered edges of a trapezoidal portion on each drive block. The overall drive block comprises the trapezoidal portion, the centre bar 36, a pair of transverse arms 56 and 58, and a pair of upstanding arms 60 and 62. The upstanding arms are substantially perpendicular to the general transverse axis of the belt. In the preferred embodiment, the arms 56 and 58 extend upwardly at an angle of approximately 7° in the transverse direction.

Both the long legs 20 and the short legs 18 have identical structures between the trapezoidal blocks and the outer fold line 44. This can best be seen by comparing Figures 4 and 2.

The band slots 32 and 34 are formed between the trapezoidal blocks and the transversely disposed arms 56 and 58. It is evident from Figure 4 that adjacent members are interconnected only at the outer extremities of the transverse arms 56 and 58, by means of the upstanding arm portions 60 and 62, and at the inner extremities.

Material may also be removed at the inner fold lines, if desired; however, the benefit obtained from such removal is less.

When the fan-folded portion is negotiating a pulley, as seen in Figure 3, the portions of the belt between the lower ends 64 of the long legs 20 and a pitch diameter or line 66 are captured between the sheaves of the pulleys and are maintained at a fixed attitude. Since the outer portion of the belt has to negotiate a longer path of travel around the pulley, flexing of the belt occurs between the pitch diameter 66 and the outer extremities 40 and 38.

This flexing induces stress levels at points A, B, C and D. The stress levels at the points A and B are very significant and very high in prior-art belts, where the adjacent band members are continuous along the upper fold line. For example, prior-art belts can have stresses, determined by finite element analysis, at the point A ranging from 745,000 kPa (108,000 psi) to 607,000 kPa (88,000 psi), depending upon the load being transmitted. Under the same load conditions, the stress levels at the point B range from 324,000 kPa (47,000 psi) to 310,000 kPa (45,000 psi). These stress levels are obviously significant in relation to the fatigue life of the belt.

In the fan-folded drive belt in accordance with the present invention the stresses, determined by finite element analysis, at the points A, B, C and D are 331,000 kPa (48,000 psi), 193,000 kPa (28,000 psi), 193,000 kPa (28,000 psi) and 262,000 kPa (38,000 psi) respectively at maximum load, and 145,000 kPa (21,000 psi), 193,000 kPa (28,000 psi), 193,000 kPa (28,000 psi) and 262,000 kPa (38,000 psi) respectively at light load. Therefore the fan-folded drive belt constructed in accordance with the present invention would have a significantly longer fatigue life or operating life than a prior-art belt. For example, if a conventional steel in a hot-rolled condition is utilised, the maximum allowable stress for indefinite life is 386,000 kPa (56,000 psi), whereas the prior-art belt would clearly not have an indefinite life if utilising this type of steel.

If a belt material is utilised having a ground and polished surface, the maximum allowable stress is 986,000 kPa (143,000 psi). In theory, the prior-art belt would have an indefinite life with such material. To provide a material which would satisfy the stress levels of the prior-art belts, a ground surface finish would have to be utilised to have a maximum life stress of 889,000 kPa (129,000 psi). However, the use of a ground, or ground and polished, finish on the belt material considerably increases the cost.

Thus the present invention not only makes available a drive belt having a potentially longer life, but it also has the potential to considerably reduce the manufacturing costs of the drive belt.

The drive surfaces 48 and 50 adjacent the legs 52 and 54 adjacent the respective band slots 32 and 34 have cut-outs 68 and 70 respectively, these cut-outs being disposed outboard of the pitch diameter 66. The cut-outs 68 and 70 are provided to permit the belt to flex without scrubbing on the faces of the pulleys 10 and 12. This improves the efficiency of the drive system, thereby reducing the operating costs of a machine utilising a fan-folded drive belt constructed in accordance with the present invention.

By the provision of a non-continuous fold line at the outer folded surfaces, the spring rate of the drive belt in the longitudinal direction is greatly reduced. It is the softening of the spring rate which provides a considerable amount of decrease in the stress level found in the belt. By providing the structure shown, not only are the stress levels decreased, but also they are more equally distributed throughout the material of each drive block.

The structure outwardly of the band slots, namely the transverse arms 56 and 58 and the upstanding portions 60 and 62, are significantly different from the prior art in that the transverse arms are wider and the upstanding portions are preferably disposed slightly further outwardly than the extremes which are found in the prior art. In the prior art, the upper portion of the belt would be T-shaped, and the outer fold line would be continuous. Such construction can be seen in the prior-art patents previously discussed, namely US-A-4 581 002 and US-A-4 500 388.

Comparison of the structures of the said prior-art patents with fan-folded drive belts having a structure in accordance with the present invention shows the improvements in stress distribution and stress levels that can be made by the expedient of using a non-continuous upper fold line. It will further be evident that the widening of the transverse arms 56 and 58 also contributes to the softening of the longitudinal spring rate of the folded belt member.

A fan-folded drive belt in accordance with the present invention thus permits improved belt life in a continuously variable transmission (CVT) through reduction of stress in the folded part of the belt.

## Claims

1. A skip-folded push-type fan-folded drive belt for a variable-speed pulley drive in which each pulley (10,12) has spaced adjustable sheaves to change the drive ratio between the pulleys (10,12) from a maximum underdrive to a maximum overdrive with each pulley (10,12) having a pitch diameter determined by the drive ratio, the drive belt (14) comprises a band of fan-folded alternate long members (20) and short members (18) maintained in a continuous loop by continuous metal belts (22,24,26,28,30) disposed in belt slots (32,34) formed on the long (20) and short (18) members, each of the members (18,20) frictionally engages the sheaves at the pitch diameter with the portion of the members (18,20) disposed radially inwardly of the pitch diameter being squeezed between the pulley sheaves, and a belt retention portion disposed radially outwardly of the belt slots (32,34) is free to deflect as the band is wrapped on to and unwrapped from each pulley (10,12) during drive transmission, characterised in that each of the belt retention portions of the long (20) and short (18) members extending radially outwardly of the pitch diameter includes an upstanding leg (36) having a pair of edge portions defining end walls of the belt slots (32,34), a pair of generally transverse arm portions (56,58) extending from each end wall and each having a distal end, and an integral joining portion (60,62) extending radially outwardly from each arm portion (56,58) at the distal end thereof, each joining portion (60,62) is integral with the adjacent member in a longitudinal direction to form a fold connection therebetween and is disconnected from the transversely adjacent joining portion (60,62), each end wall has inner and outer stress points (A,B) and each joining portion (60,62) has inner and outer stress points (C,D), and the arm portions (56,58) are sufficiently long to cause the stress at the outer end wall and inner joining portion stress points (A,B,C,D) resulting from deflection of the belt retention portion to be substantially equal.

2. A fan-type drive belt according to claim 1, characterised in that the integral joining portion (60,62) of each generally transverse arm portion (56,58) extends substantially perpendicularly to the transverse arm portion (56,58) and outwardly from the belt slot (32,34) at the distal end thereof, and is integral with the adjacent member to form, in addition to the fold connection (44) therebetween, a central open portion between the integral joining portions (60,62).

3. A fan-type drive belt according to claim 1 or 2, characterised in that the length of each joining portion (60,62) is less than 30% of the total transverse length of the transverse arm portion (56,58) and the joining portion (60,62).

*Fig. 1*

*Fig. 2*

*Fig. 3*

*Fig. 4*

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | EP-A-0 165 677 (GENERAL MOTORS CORP.) * Whole document * & US-A-4 581 002 (Cat. D,A) | 1 | F 16 G 5/16 |
| D,A | US-A-4 540 388 (CATALDO) | | |

TECHNICAL FIELDS SEARCHED (Int. Cl.4)

F 16 G

The present search report has been drawn up for all claims

| Place of search | Date of completion of the search | Examiner |
|---|---|---|
| THE HAGUE | 10-10-1988 | BARON C. |